# EUROPEAN PATENT APPLICATION

(11) **EP 4 832 125 A1**
(43) Date of publication of application: **28.10.2026**
(21) Application number: 24905709.2
(22) Date of filing: 24.09.2024
(51) Int. Cl.: H01M 10/04, H01M 50/30, H01M 50/545, H01M 50/55, H01M 50/536

(54) **BATTERY, BATTERY MODULE, AND VEHICLE**

(30) Priority: 18.12.2023 CN 202311744091
(71) Applicant: BYD Company Limited, Shenzhen, Guangdong 518118 (CN)
(72) Inventor: XIONG, Min, Shenzhen, Guangdong 518118 (CN); YAN, Yong, Shenzhen, Guangdong 518118 (CN); XU, Jingru, Shenzhen, Guangdong 518118 (CN); KANG, Erji, Shenzhen, Guangdong 518118 (CN); HUANG, Feng, Shenzhen, Guangdong 518118 (CN)
(74) Representative: Gunzelmann, Rainer
(86) International application number: PCT/CN2024/120645
(87) International publication number: WO 2025/130218

(57) **Abstract**

A battery, a battery module, and a vehicle are provided. The battery includes a housing, a battery cell, and two connecting tabs. At least a partial region of the housing is electrically conductive. The battery cell is accommodated in the housing, and the two connecting tabs are respectively electrically connected to two electrodes of the battery cell.

## Description

This application claims priority to Chinese Patent Application No. 202311744091.5, filed with the China National Intellectual Property Administration on December 18, 2023 and entitled "BATTERY, BATTERY MODULE, AND VEHICLE", which is incorporated herein by reference in its entirety.

### TECHNICAL FIELD

This application relates to the battery field, and in particular, to a battery, a battery module including the battery, and a vehicle including the battery module.

### BACKGROUND

A battery is usually classified into a pouch battery and a hard-pack battery. In the pouch battery, an aluminum plastic film is usually used to accommodate a battery cell. However, structural strength of the aluminum plastic film is relatively weak, and increasing thickness of the aluminum plastic film to improve strength leads to an increase in costs of the battery.

For the hard-pack battery, a metal housing is usually used to accommodate a battery cell, and electrical connection between the battery cell and an external environment is achieved by using a cover plate provided with a conductive post. However, in an actual processing process, there is a need to ensure relatively high assembly precision between the cover plate and the metal housing to ensure sealing of the battery, which leads to an increase in costs.

### SUMMARY

In view of the foregoing disadvantages of the conventional technology, an objective of this application is to provide a battery with improved sealing performance, a battery module including the battery, and a vehicle including the battery module. Specifically, the following technical solutions are included.

According to a first aspect, an embodiment of this application provides a battery, and the battery includes: a housing, where the housing has an electrically conductive region; a battery cell, accommodated in the housing; and two connecting tabs, respectively electrically connected to two electrodes of the battery cell. One of the connecting tabs is electrically connected to the electrically conductive region of the housing, and the other connecting tab extends out of the housing and is spaced apart from the electrically conductive region of the housing. The electrically conductive region of the housing and the connecting tab extending out of the housing are respectively configured to be electrically connected to an external circuit.

In the battery in this application, one connecting tab electrically connected to the electrode of the battery cell is electrically connected to the electrically conductive region of the housing, and the other connecting tab electrically connected to the electrode of the battery cell extends out of the housing. This enables this application to be electrically connected to the external circuit by using the connecting tab extending out of the housing and the electrically conductive region of the housing. In this way, when a current transmission function of the battery in this application is implemented, impact of extension of the connecting tab on sealing performance is reduced, thereby improving the sealing performance of the battery in this application and reducing costs.

In an embodiment, the housing includes two detachable parts, and the electrically conductive region of the housing is disposed on one of the parts of the housing.

In an embodiment, at least one of the two parts of the housing includes a bottom plate and a side plate. The electrically conductive region of the housing is disposed on at least the side plate and is electrically connected to one of the connecting tabs.

In an embodiment, the connecting tab extending out of the housing passes through a gap between the two parts of the housing.

In an embodiment, the battery further includes an insulating member. The insulating member is at least partially located at the gap and is located in a space formed by the connecting tab extending out of the housing and the gap.

In an embodiment, the insulating member fills the space formed by the connecting tab and the gap, and the insulating member is further configured to seal the gap.

In an embodiment, the battery further includes a sealing member. One end of the sealing member surrounds and is fastened to an end portion of the connecting tab extending out of the housing, and the other end extends toward the housing and abuts against an outer surface of the housing.

In an embodiment, the two electrodes of the battery cell are disposed at an interval on a same side of the battery cell.

In an embodiment, the battery further includes a positioning plate. The positioning plate is accommodated in the housing, and the positioning plate is provided with two through holes spaced apart from each other. Each of the two connecting tabs passes through one of the through holes and is electrically connected to one of the electrodes. The positioning plate is configured to limit a relative position between the two connecting tabs.

In an embodiment, two opposite ends of the insulating member respectively extend into the housing and extend out of the housing.

In an embodiment, the housing is provided with a first protrusion and a second protrusion. The gap is disposed in the first protrusion.

In an embodiment, the housing is provided with a recessed portion. Both the first protrusion and the second protrusion are disposed in the recessed portion.

In an embodiment, the battery cell includes a plurality of cores each provided with a tab. The plurality of cores include a plurality of positive cores and a plurality of negative cores.

In an embodiment, the battery further includes a plurality of fasteners. The fasteners are disposed on an outer periphery of the housing to fasten the battery.

According to a second aspect, an embodiment of this application provides a battery module, and the battery module includes a battery tray and the battery according to the first aspect. The battery is accommodated in the battery tray.

According to a third aspect, an embodiment of this application provides a vehicle, and the vehicle includes the battery module according to the second aspect.

It may be understood that both the battery module provided in the second aspect of this application and the vehicle provided in the third aspect of this application, by using the battery provided in the first aspect of this application, achieve effects of improved sealing performance and reduced costs.

### BRIEF DESCRIPTION OF DRAWINGS

FIG. 1 is a schematic exploded view of a battery 100 according to an embodiment of this application;
FIG. 2 is a schematic diagram of a partial structure of a battery 100 according to an embodiment of this application;
FIG. 3 is a schematic diagram of a partial cross section of a battery 100 according to an embodiment of this application;
FIG. 4 is a partial enlarged schematic view of a battery 100 according to an embodiment of this application;
FIG. 5 is another schematic diagram of a partial structure of a battery 100 according to an embodiment of this application;
FIG. 6 is another schematic exploded view of a battery 100 according to an embodiment of this application;
FIG. 7 is a schematic diagram of a structure of a battery 100 according to an embodiment of this application;
FIG. 8 is still another schematic exploded view of a battery 100 according to an embodiment of this application;
FIG. 9 is another schematic diagram of a structure of a battery 100 according to an embodiment of this application;
FIG. 10 is a schematic diagram of a structure of a battery cell 20 according to an embodiment of this application;
FIG. 11 is another schematic diagram of a structure of a battery cell 20 according to an embodiment of this application; and
FIG. 12 is a schematic diagram of a structure of a battery module 1000 according to an embodiment of this application.

### Description of reference numerals:

1000: Battery module; 100: Battery; 200: Battery tray; 10: Housing; 20: Battery cell;
21: Core; 22: Electrode; 221: Positive electrode; 222: Negative electrode; 30: Connecting tab; 31: First connecting tab; 32: Second connecting tab; 11: Housing body; 12: Cover; 13: Gap; 10a: Bottom plate; 10b: Side plate; 111: First bottom plate; 112: First side plate; 121: Second bottom plate; 122: Second side plate; 113: First extension structure; 123: Second extension structure; 40: Insulating member; 50: Sealing member; 60: Positioning plate; 61: Through hole; 14: Protrusion; 141: First protrusion; 142: Second protrusion; 70: Electrolyte injection hole; 80: Explosion-proof valve; 90: Fastener; 211: Tab; 21a: Positive core; 21b: Negative core; 211a: Positive tab; 211b: Negative tab; 15: Recessed portion; 23: Insulating film; 114: First part; 124: Second part; 001: First direction; 002: Second direction; 003: Third direction.

### DESCRIPTION OF EMBODIMENTS

For ease of understanding of this application, the following provides a more comprehensive description of this application with reference to related accompanying drawings. Preferred implementations of this application are provided in the accompanying drawings. However, this application may be implemented in a plurality of different forms, and is not limited to the implementations described in this specification. On the contrary, an objective of providing these implementations is to enable a more thorough and comprehensive understanding of the disclosure of this application.

The following descriptions of the embodiments are shown with reference to accompanying drawings to illustrate specific embodiments that may be used to implement this application. A sequence number such as "first" or "second" of a component in this specification is merely used to distinguish between described objects, and does not have any sequence or technical meaning. In addition, unless otherwise specified, the term "connect" and "joint" in this application both include direct and indirect connection (joint). The directional terms mentioned in this application, for example, "upper", "lower", "front", "rear", "left", "right", "internal", "external", and "side", are merely directions based on the accompanying drawings. Therefore, the directional terms are used to better and more clearly describe and understand this application, instead of indicating or implying that a specified apparatus or element should have a specific orientation or be constructed and operated in a specific orientation. Therefore, this cannot be understood as a limitation on this application.

In the descriptions of this application, it should be noted that, unless otherwise specified and limited, terms "mount", "communicate", and "connect" should be understood in a broad sense, for example, may be a fixed connection, a detachable connection, or an integrated connection, may be a mechanical connection, may be a direct connection or an indirect connection by using an intermediate medium, or may be a connection between the inside of two elements. A person of ordinary skill in the art may understand specific meanings of the foregoing terms in this application based on specific situations. It should be noted that terms such as "first" and "second" in the specification, claims, and accompanying drawings of this application are used to distinguish between different objects, and are not used to describe a specific sequence. In addition, the terms "include", "may include", "comprise", or "may comprise" used in this application indicate existence of a disclosed corresponding function, operation, element, or the like, and do not limit one or more other functions, operations, elements, or the like. In addition, the term "include" or "comprise" indicates existence of corresponding features, numbers, steps, operations, elements, components, or combinations thereof disclosed in this specification, does not rule out existence or addition of one or more other features, numbers, steps, operations, elements, components, or combinations thereof, and is intended to cover non-exclusive inclusions.

Unless otherwise defined, all technical and scientific terms used in this specification have the same meaning as those commonly understood by those skilled in the art that belong to this application. The terms used in this specification of this application are merely intended to describe specific implementations, and are not intended to limit this application.

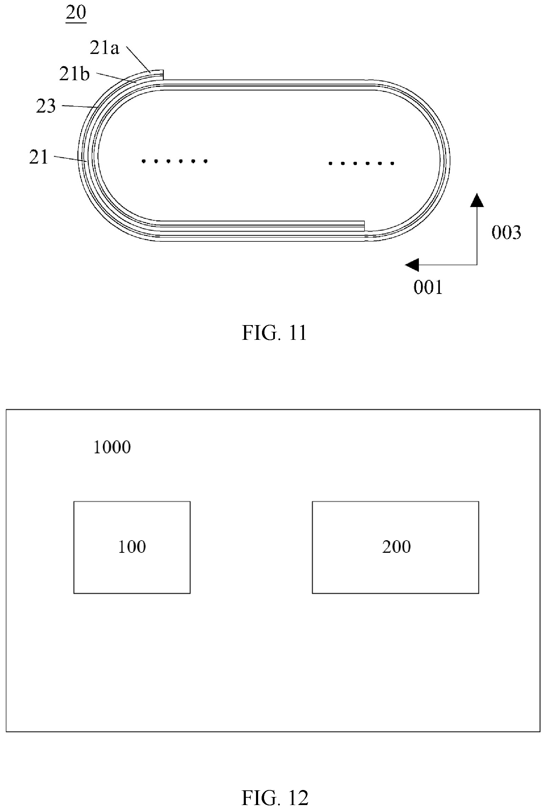

A vehicle provided in this application includes a vehicle body and a battery module 1000 described in FIG. 12. The battery module 1000 is accommodated in the vehicle body to protect the battery module. The battery module 1000 is configured to provide electric energy for the vehicle and drive the vehicle. The battery module 1000 includes a battery 100 and a battery tray 200. A plurality of batteries connected in parallel and/or in series are accommodated in the battery tray to protect the batteries. The plurality of batteries cooperate with each other to convert chemical energy stored in the batteries into electric energy and transmit the electric energy to the vehicle, thereby implementing a current transmission function of the batteries.

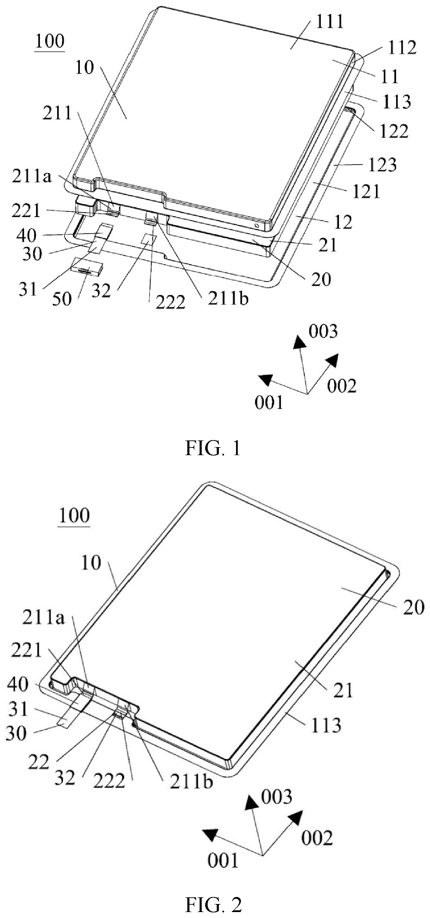

Refer to FIG. 1 and FIG. 2. FIG. 1 is a schematic exploded view of a battery 100 according to an embodiment of this application. FIG. 2 is a schematic diagram of a partial structure of a battery 100 according to an embodiment of this application. For ease of description, some structures in the battery 100 are omitted in FIG. 2.

As shown in FIG. 1 and FIG. 2, the battery 100 in this application includes a housing 10 and a battery cell 20. The battery cell 20 is accommodated in the housing 10, and the housing 10 is configured to prevent external impurities from entering the housing 10, thereby protecting the battery cell 20. In addition, the housing 10 also provides an accommodating space for accommodating an electrolyte (not shown in the figure), so that an external electrolyte is also injected into the housing 10 and cooperates with the battery cell 20 to implement charging and discharging performance of the battery 100 in this application.

The battery cell 20 includes a core 21 and two electrodes 22. The two electrodes 22 are respectively a positive electrode 221 and a negative electrode 222. The positive electrode 221 and the negative electrode 222 are respectively electrically connected to a positive core (not shown in the figure) and a negative core (not shown in the figure) in the core 21. It may be understood that chemical energy stored in the electrolyte can generate electric energy under the action of the core 21. The generated electric energy can be output outward through the positive electrode 221 and the negative electrode 222. In this way, a current output function of the battery 100 in this application is implemented.

In addition, external current can also be input into the core 21 through the positive electrode 221 and the negative electrode 222, and cooperate with the electrolyte to convert electric energy into chemical energy and store the chemical energy in the electrolyte, thereby implementing a charging function of the battery 100 in this application.

For ease of description, in FIG. 1 and subsequent figures, plane directions of the housing 10 are respectively set as a first direction 001 and a second direction 002 perpendicular to each other, and a third direction 003 perpendicular to the first direction 001 and the second direction 002 is set.

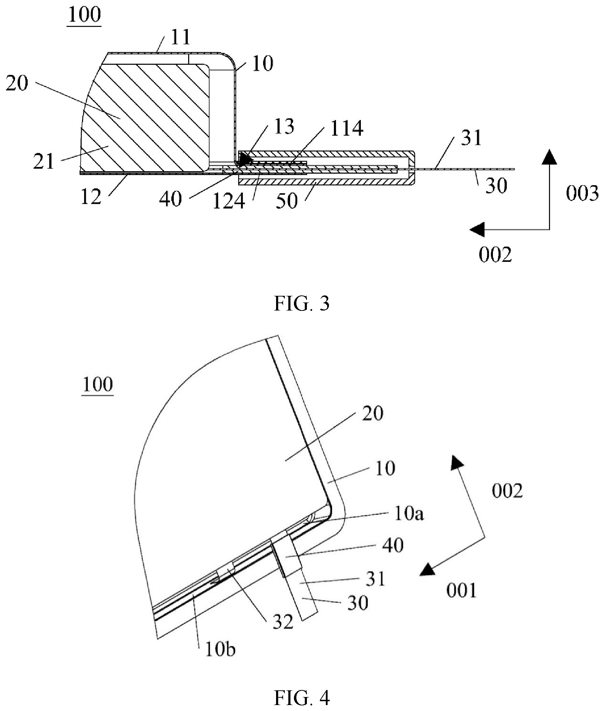

Refer to FIG. 3. FIG. 3 is a schematic diagram of a partial cross section of a battery 100 according to an embodiment of this application. Refer to FIG. 1 and FIG. 2 as well.

As shown in FIG. 1 to FIG. 3, the battery 100 in this application further includes two connecting tabs 30, which are respectively a first connecting tab 31 and a second connecting tab 32. One end of the first connecting tab 31 is electrically connected to the positive electrode 221, and the other end passes through the housing 10 in the second direction 002 and partially extends out of the housing 10.

At least a partial region of the housing 10 is electrically conductive. One end of the second connecting tab 32 is electrically connected to the negative electrode 222, and the other end is electrically connected to the electrically conductive region that is electrically conductive. In addition, the first connecting tab 31 and the electrically conductive region are spaced apart from each other to prevent the first connecting tab 31 from being electrically connected to the second connecting tab 32 through the electrically conductive region, thereby ensuring safe use of the battery 100 in this application.

An external circuit may be electrically connected separately to the first connecting tab 31 extending out of the housing 10 and the electrically conductive region of the housing 10. Specifically, a positive electrode of the external circuit may be electrically connected to the positive electrode 221 of the battery cell 20 through the first connecting tab 31, and a negative electrode of the external circuit may be electrically connected to the second connecting tab 32 through the electrically conductive region of the housing 10, and further electrically connected to the negative electrode 222 through the second connecting tab 32. In this way, charging and discharging functions of the battery 100 in this application are implemented.

It may be understood that in some other embodiments, the first connecting tab 31 may alternatively be electrically connected to the negative electrode 222 of the battery cell 20. Correspondingly, the second connecting tab 32 should be electrically connected to the positive electrode 221 of the battery cell 20. Correspondingly, the positive electrode of the external circuit is electrically connected to the second connecting tab 32, and the negative electrode of the external circuit is electrically connected to the first connecting tab 31.

Therefore, compared with the conventional technology in which a hard-pack battery uses a cover plate with a conductive post to implement electrical connection between a battery cell in a housing and an external circuit, in the battery 100 in this application, the housing 10 having at least a partial region that is electrically conductive is disposed, the second connecting tab 32 is electrically connected between the electrically conductive region of the housing 10 and one electrode 22, and the first connecting tab 31 extending out of the housing 10 is electrically connected to the other electrode 22 and is spaced apart from the electrically conductive region. In this way, when the charging and discharging functions of the battery 100 in this application are ensured, a quantity of connecting tabs 30 extending out of the housing 10 is reduced, thereby reducing impact of extension of the connecting tabs 30 on sealing performance and improving the sealing performance of the battery 100 in this application.

Specifically, in an embodiment, as shown in FIG. 1 to FIG. 3, the housing 10 includes two detachably connected parts, and the electrically conductive region of the housing 10 is disposed on one of the two parts of the housing 10. The two parts of the housing 10 are respectively a housing body 11 and a cover 12. In the third direction 003, the housing body 11 and the cover 12 abut against each other to form an accommodating space (not shown in the figure) for accommodating the battery cell 20. The electrically conductive region of the housing 10 is provided on the housing body 11 and/or the cover 12.

An end of the second connecting tab 32 away from the battery cell 20 abuts against a connection position between the housing body 11 and the cover 12. The first connecting tab 31 passes through a gap 13 between the housing body 11 and the cover 12. When the housing body 11 is electrically conductive, the first connecting tab 31 is spaced apart from the housing body 11. When the cover 12 is electrically conductive, the first connecting tab 31 is spaced apart from the cover 12. This ensures that the first connecting tab 31 is spaced apart from the electrically conductive region of the housing 10, thereby preventing a short circuit caused when the first connecting tab 31 is electrically connected to the second connecting tab 32.

It may be understood that an end portion of the second connecting tab 32 is disposed at the connection position between the housing body 11 and the cover 12, so that when the housing body 11 is fixedly connected to the cover 12, the second connecting tab 32 is also fixedly connected between the housing body 11 and the cover 12. In this way, when electrical connection between the second connecting tab 32 and the electrically conductive region of the housing 10 is ensured, a position of the second connecting tab 32 is limited. In this way, a phenomenon such as a short circuit caused by shift of the position of the second connecting tab 32 during transportation is avoided, thereby improving safety performance of the battery 100 in this application.

Refer to FIG. 4. FIG. 4 is a partial enlarged schematic view of a battery 100 according to an embodiment of this application. Refer to FIG. 1 as well.

As shown in FIG. 1 and FIG. 4, at least one of the two parts of the housing 10 includes a bottom plate 10a and a side plate 10b. The side plate 10b surrounds an edge of the bottom plate 10a to form an accommodating space (not shown in the figure) for accommodating the battery cell 20. An end portion of the second connecting tab 32 away from the battery cell 20 abuts against and is electrically connected to a surface of the side plate 10b facing the battery cell 20.

Specifically, as shown in FIG. 1, the housing body 11 includes a first bottom plate 111 and a first side plate 112, and the first side plate 112 surrounds an edge of the first bottom plate 111. The housing body 11 is electrically conductive. In FIG. 4, the bottom plate 10a is the first bottom plate 111, and the side plate 10b is the first side plate 112. Correspondingly, the end portion of the second connecting tab 32 away from the battery cell 20 abuts against and is electrically connected to a surface of the first side plate 112 facing the battery cell 20, so that the external circuit is electrically connected to the battery cell 20 through the housing body 11 and the first connecting tab 31.

In addition, as shown in FIG. 1, the cover 12 includes a second bottom plate 121 and a second side plate 122, and the second side plate 122 surrounds an edge of the second bottom plate 121. The cover 12 is electrically conductive. In FIG. 4, the bottom plate 10a is the second bottom plate 121, and the side plate 10b is the second side plate 122. Correspondingly, the end portion of the second connecting tab 32 away from the battery cell 20 abuts against and is electrically connected to a surface of the second side plate 122 facing the battery cell 20, so that the external circuit is electrically connected to the battery cell 20 through the cover 12 and the first connecting tab 31.

It may be understood that the end portion of the second connecting tab 32 abuts against the surface of the side plate 10b close to the battery cell 20, so as to ensure that the second connecting tab 32 is entirely accommodated in the housing 10, thereby further reducing impact of the second connecting tab 32 on a connection effect between the housing body 11 and the cover 12. This further improves the sealing performance of the battery 100 in this application.

In another embodiment, the housing body 11 includes the first bottom plate 111 and the first side plate 112. The corresponding cover 12 may be configured as a sheet-shaped structure only. Correspondingly, in another embodiment, the cover 12 includes the second bottom plate 121 and the second side plate 122, and the corresponding housing body 11 is configured as a sheet-shaped structure only.

In an embodiment, as shown in FIG. 1 to FIG. 4, the positive electrode 221 and the negative electrode 222 of the battery cell 20 are located on a same side of the core 21 in the second direction 002. Correspondingly, the first connecting tab 31 and the second connecting tab 32 are also located on a same side of the core 21.

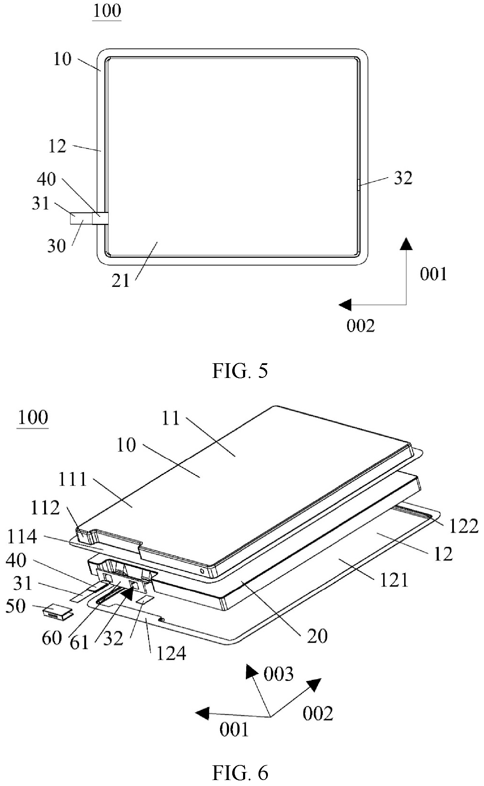

It may be understood that in some other embodiments, as shown in FIG. 5, the first connecting tab 31 and the second connecting tab 32 may alternatively be located on different sides of the core 21, to increase a distance between the first connecting tab 31 and the second connecting tab 32 and further avoid the short circuit.

In an embodiment, as shown in FIG. 1 to FIG. 3, the battery 100 in this application further includes an insulating member 40. The insulating member 40 is partially located in the gap 13, is located in a space formed by the first connecting tab 31 and the gap 13, and abuts against the surface of the first connecting tab 31.

At least a partial region of the housing 10 is electrically conductive. It may be understood that provision of the insulating member 40 can achieve separation between the first connecting tab 31 and the housing 10, thereby preventing the first connecting tab 31 from being in contact with the electrically conductive region of the housing 10, which ensures safe use of the battery 100 in this application.

In addition, the provision of the insulating member 40 can also reduce a space between the first connecting tab 31 and the gap 13, thereby achieving shielding of the gap 13 to reduce the possibility that external impurities enter the housing 10 through the gap 13. Further, the sealing performance of the battery 100 in this application is ensured.

In an embodiment, as shown in FIG. 1 to FIG. 3, the insulating member 40 fills the space formed by the first connecting tab 31 and the gap 13, to block external impurities from entering the housing 10 through the gap 13 and block the electrolyte inside the housing 10 from flowing out of the housing 10 through the gap 13. In this way, the insulating member 40 can cooperate with the first connecting tab 31 to implement sealing of the gap 13. Further, the sealing performance of the battery 100 in this application is improved.

In an embodiment, as shown in FIG. 1 to FIG. 3, in the second direction 002, two opposite ends of the insulating member 40 may further respectively extend into the housing 10 and extend out of the housing 10, to further improve an insulating effect of the insulating member 40 on the first connecting tab 31, and further reduce a possibility that the first connecting tab 31 is electrically connected to the second connecting tab 32. In this way, the safety performance of the battery 100 in this application is further improved.

In addition, when the insulating member 40 fills the space formed by the first connecting tab 31 and the gap 13, extension of two opposite ends of the insulating member 40 can further improve a sealing effect of the insulating member 40 on the gap 13. In this way, the sealing performance of the battery 100 in this application is further improved.

In an embodiment, as shown in FIG. 1 to FIG. 3, the battery 100 in this application further includes a sealing member 50. The sealing member 50 is located outside the housing 10. In addition, the sealing member 50 surrounds and is fastened to the end portion of the first connecting tab 31 extending out of the housing 10, and extends toward the housing 10 and abuts against the outer surface of the housing 10.

It may be understood that when the insulating member 40 does not completely fill the space formed by the first connecting tab 31 and the gap 13, provision of the sealing member 50 further blocks the possibility that external impurities enter the housing 10, and also blocks the internal electrolyte from flowing out of the housing 10 through the space between the insulating member 40 and the gap 13. In this way, the sealing performance of the battery 100 in this application is improved.

When the insulating member 40 completely fills the space formed by the first connecting tab 31 and the gap 13, the provision of the sealing member 50 further improves the sealing effect of this application on the gap 13, thereby further improving the sealing performance of the battery 100 in this application.

In an embodiment, the insulating member 40 is made of a copolymer such as polypropylene.

In an embodiment, the sealing member 50 is prepared by using a thermally activated sealing material, for example, polypropylene. It may be understood that, in some other embodiments, the sealing member 50 may alternatively be made of an adhesive material in a form of liquid or gel and prepared through curing. This is not specifically limited in this application.

Refer to FIG. 6. FIG. 6 is another schematic exploded view of a battery 100 according to an embodiment of this application.

As shown in FIG. 6, the positive electrode 221 and the negative electrode 222 of the battery cell 20 are disposed at an interval on the same side of the battery cell 20. The battery 100 in this application includes a positioning plate 60. The positioning plate 60 is accommodated in the housing 10, and the positioning plate 60 is provided with two through holes 61 spaced apart from each other. Each of the through holes 61 is disposed corresponding to each of the positive electrode 221 and the negative electrode 222.

Specifically, one end of the first connecting tab 31 passes through a corresponding through hole 61 to be electrically connected to the positive electrode 221, and the other end extends out of the housing 10 to be electrically connected to the external circuit. One end of the second connecting tab 32 passes through the other through hole 61 to be electrically connected to the negative electrode 222, and the other end is electrically connected to the electrically conductive region of the housing 10.

During transportation of the battery 100, the first connecting tab 31 and the second connecting tab 32 may shift in the first direction 001 due to vibration during transportation. It may be understood that provision of the positioning plate 60 can limit a position of the first connecting tab 31 relative to the second connecting tab 32, thereby preventing a phenomenon of a short circuit between the two connecting tabs 30 caused when the first connecting tab 31 and the second connecting tab 32 shift in the first direction 001. This further ensures safe use of the battery 100 in this application.

In an embodiment, as shown in FIG. 1 to FIG. 3, the housing body 11 further includes a first extension structure 113. The first extension structure 113 is disposed on an end portion of the first side plate 112 away from the first bottom plate 111, and separately extends outward in a direction away from the battery cell 20. Correspondingly, the cover 12 further includes a second extension structure 123. The second extension structure 123 is disposed on an end portion of the second side plate 122 away from the second bottom plate 121, and separately extends outward in the direction away from the battery cell 20.

The first extension structure 113 and the second extension structure 123 may cooperate with and be fixedly connected to each other, thereby implementing fixed connection between the housing body 11 and the cover 12. It may be understood that provision of the first extension structure 113 and the second extension structure 123 can increase a contact area between the housing body 11 and the cover 12 while maintaining an overall thickness of the housing body 11 and the cover 12 unchanged, thereby facilitating connection between the housing body 11 and the cover 12.

Specifically, in this embodiment, a connection manner between the housing body 11 and the cover 12 may be welding. In the first direction 001 and the second direction 002, the first extension structure 113 and the second extension structure 123 are welded together. A welded part includes the end portion of the sandwiched second connecting tab 32 away from the battery cell 20, and does not include the gap 13 of the housing 10 through which an end portion of the first connecting tab 31 away from the battery cell 20 passes.

Therefore, compared with the conventional technology in which a precision requirement for assembly between the cover plate and the housing in the hard-pack battery is relatively high, the connection manner between the housing body 11 and the cover 12 provided in the battery 100 in this application can reduce the precision requirement, thereby lowering manufacturing costs of the battery 100 in this application.

It may be understood that, in some other embodiments, the connection manner between the housing body 11 and the cover 12 in the battery 100 in this application may be another. This is not specifically limited in this application.

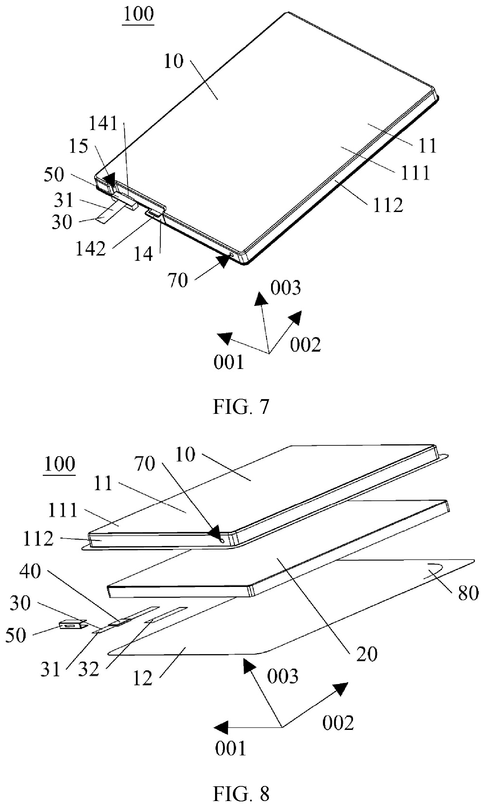

Refer to FIG. 7. FIG. 7 is a schematic diagram of a structure of a battery 100 according to an embodiment of this application. Refer to FIG. 3 as well.

As shown in FIG. 3 and FIG. 7, the housing 10 is provided with two protrusions 14, which are respectively a first protrusion 141 and a second protrusion 142. The gap 13 is provided in the first protrusion 141. The end portion of the first connecting tab 31 away from the battery cell 20 extends out of the first protrusion 141 through the gap 13. The sealing member 50 surrounds and is fastened to a periphery of the first connecting tab 31, extends toward the outer surface of the housing 10 in the second direction 002, and is disposed around a periphery of the first protrusion 141.

In this application, the connection manner between the cover 12 and the housing body 11 is welding. In an actual manufacturing process, when the first extension structure 113 and the second extension structure 123 are welded together, an unwelded part may be trimmed to reduce an overall size of the battery 100 in this application. In a trimming process, a partial region where the second connecting tab 32 is sandwiched and a region where the gap 13 is located are avoided, thereby separately forming the first protrusion 141 and the second protrusion 142.

For the first protrusion 141, the first protrusion 141 includes a first part 114 located on the housing body 11 and a second part 124 located on the cover 12. The first part 114 and the second part 124 are welded to each other, and the gap 13 is formed between the first part 114 and the second part 124.

It may be understood that the sealing member 50 is disposed around the periphery of the first protrusion 141, and the sealing member 50 is in contact with the outer surface of the housing 10, so that the electrolyte inside the housing 10 can be prevented from flowing out from a side wall of the first protrusion 141 in the first direction 001 through the gap 13. This further improves the sealing effect of the sealing member 50 on the gap 13, and further improves the sealing performance of the battery 100 in this application.

For the second protrusion 142, provision of the second protrusion 142 ensures a connection area between the second connecting tab 32 and the housing body 11 and the cover 12, thereby ensuring welding strength of the second connecting tab 32. This improves connection stability of the battery 100 in this application.

In an embodiment, as shown in FIG. 7, the housing 10 is further concavely provided with a recessed portion 15. The recessed portion 15 extends toward the battery cell 20 in the second direction 002, and both the first protrusion 141 and the second protrusion 142 are disposed in the recessed portion 15. It may be understood that provision of the recessed portion 15 reduces a size occupied by the first protrusion 141 and the second protrusion 142 in the second direction 002, thereby increasing a space proportion of the battery cell 20, and increasing a capacity of the battery 100 in this application.

In an embodiment, the housing body 11 is prepared by using an electrically conductive metal material. For example, the housing body 11 is prepared by using an iron alloy, an aluminum alloy, or another material. It may be understood that compared with the conventional technology in which a housing of a pouch battery is prepared by using an aluminum plastic film structure, in this application, the housing body 11 of the battery 100 is prepared by using the metal material, thereby improving strength of the housing 10 and improving structural strength of the battery 100 in this application.

In an embodiment, a thickness of the housing body 11 is between 20 µm and 500 µm. It may be understood that the thickness of the housing body 11 is set between 20 µm and 500 µm, so that strength of the housing body 11 can be ensured, and the housing body 11 can be prevented from being excessively thick and occupying excessive space of the battery cell 20, which affects the capacity of the battery 100 in this application.

In an embodiment, the cover 12 is prepared by using an electrically conductive metal material. For example, the cover 12 is prepared by using an iron alloy, an aluminum alloy, or another material. It may be understood that compared with the conventional technology in which the housing of the pouch battery is prepared by using the aluminum plastic film structure, in this application, the cover 12 of the battery 100 is prepared by using the metal material, thereby improving strength of the housing 10 and improving the structural strength of the battery 100 in this application.

In an embodiment, a thickness of the cover 12 is between 20 µm and 500 µm. It may be understood that the thickness of the cover 12 is set between 20 µm and 500 µm, so that strength of the cover 12 can be ensured, and the cover 12 can be prevented from being excessively thick and occupying excessive space of the battery cell 20, which affects the capacity of the battery 100 in this application.

In an embodiment, as shown in FIG. 7, the housing body 10 is further provided with an electrolyte injection hole 70. The electrolyte injection hole 70 communicates with an interior of the housing 10, so that electrolyte can be injected into the housing 10 through the electrolyte injection hole 70, thereby improving injection efficiency of the electrolyte.

Therefore, compared with an electrolyte injection manner used in the pouch battery, in the battery 100 in this application, the electrolyte injection hole 70 is provided for injection of the electrolyte, so that the loss of electrolyte during injection can be reduced, thereby implementing control over flow of the electrolyte inside the housing 10.

Refer to FIG. 8. FIG. 8 is still another schematic exploded view of a battery 100 according to an embodiment of this application.

As shown in FIG. 8, the battery 100 in this application further includes an explosion-proof valve 80. The explosion-proof valve 80 is disposed on the cover 12, so that when an interior of the battery 100 is at high temperature and high pressure, the explosion-proof valve 80 opens to release pressure from a gas inside the housing 10, thereby ensuring safe use of the battery 100 in this application.

Specifically, in this embodiment, the explosion-proof valve 80 may be formed by thinning a partial region of the cover 12, so that when a high-temperature and high-pressure gas is generated inside the housing 10, the high-temperature and high-pressure gas can directly break through the partial region to achieve pressure relief. In this way, safe use of the battery 100 of this application is ensured.

In an embodiment, the insulating member 40 and the sealing member 50 may also serve as a structure of the explosion-proof valve 80. When the high-temperature and high-pressure gas is generated inside the housing 10, a high-temperature environment directly melts the insulating member 40 and the sealing member 50, or the high-pressure environment directly damages a sealing structure formed by the insulating member 40 and the sealing member 50, thereby achieving pressure relief. This ensures safe use of the battery 100 in this application.

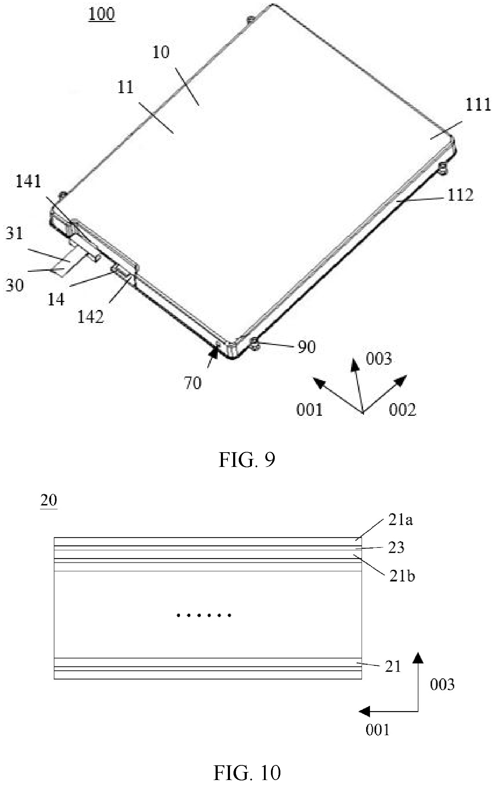

Refer to FIG. 9. FIG. 9 is another schematic diagram of a structure of a battery 100 according to an embodiment of this application.

As shown in FIG. 9, the battery 100 in this application further includes a fastener 90. A plurality of fasteners 90 are provided and disposed on an outer periphery of the housing 10, so that the battery 100 is fastened in a battery tray.

Refer to FIG. 10. FIG. 10 is a schematic diagram of a structure of a battery cell 20 according to an embodiment of this application. Refer to FIG. 1 as well.

As shown in FIG. 1 and FIG. 10, the battery cell 20 in this application includes a plurality of cores 21 each provided with a tab 211. The plurality of cores 21 include a plurality of positive cores 21a and a plurality of negative cores 21b. Each positive core 21a corresponds to a positive tab 211a, and each negative core 21b corresponds to a negative tab 211b. The plurality of positive tabs 211a are gathered and welded together to form the positive electrode 221, and the plurality of negative tabs 211b are gathered and welded together to form the negative electrode 222. The positive cores 21a and the negative cores 21b are alternately stacked and arranged in the third direction 003.

Because the charging and discharging performance of the battery 100 mainly comes from mutual conversion between electric energy and chemical energy, and the mutual conversion between electric energy and chemical energy is mainly achieved by using the positive cores 21a, the negative cores 21b, and the electrolyte (not shown in the figure). When the battery 100 is electrically connected to the external circuit, the positive cores 21a have an oxidation reaction with the electrolyte to obtain electrons, and the negative cores 21b have a reduction reaction with the electrolyte to lose electrons, thereby creating a potential difference between the positive cores 21a and the negative cores 21b. In this way, conversion between chemical energy and electric energy is implemented.

When the external circuit inputs current to the positive cores 21a and the negative cores 21b, due to the potential difference between the positive cores 21a and the negative cores 21b, the positive cores 21a and the negative cores 21b chemically react with the electrolyte, thereby converting electric energy into chemical energy and storing the chemical energy in the electrolyte.

To increase the capacity of the battery 100, there is a need to increase a contact area between the positive cores 21a, the negative cores 21b, and the electrolyte. The plurality of positive cores 21a and the plurality of negative cores 21b are provided, and the plurality of positive cores 21a and the plurality of negative cores 21b are alternately arranged, so that the battery 100 in this application can have a larger capacity.

In addition, electric energy generated by cooperation of the positive cores 21a and the negative cores 21b can be output to the external circuit through the positive tabs 211a and the negative tabs 211b. In this way, a discharging function of the battery 100 in this application can be implemented. In addition, current input from the external circuit can also be transmitted to the battery cell 20 through the positive tabs 211a and the negative tabs 211b. In this way, the charging function of the battery 100 in this application can be implemented.

It may be understood that in this embodiment, as shown in FIG. 10, the plurality of positive cores 21a and the plurality of negative cores 21b are alternately arranged to form the battery cell 20, thereby making the battery 100 in this application a blade battery.

In another embodiment, as shown in FIG. 11, the plurality of positive cores 21a may be connected as a whole, and the plurality of negative cores 21b may also be connected as a whole, so that the positive cores 21a and the negative cores 21b are attached to each other and then wound to form the battery cell 20, thereby making the battery 100 in this application a wound battery.

It may be understood that in this embodiment, the positive core 21a and the negative core 21b provided in the battery 100 in this application are made of different materials, so that the charging and discharging functions of the battery 100 in this application can be implemented by using a chemical reaction between the materials of the positive cores 21a and the negative cores 21b and the electrolyte. For example, the battery 100 in this application is a lithium-ion battery. In another embodiment, the positive core 21a and the negative core 21b provided in the battery 100 in this application may alternatively be made of a same material. For example, the battery 100 in this application may be a sodium-ion battery.

In an embodiment, as shown in FIG. 10 and FIG. 11, the battery cell 20 further includes a plurality of insulating films 23. The insulating films 23 are disposed between the positive cores 21a and the negative cores 21b, and are respectively attached to the positive cores 21a and the negative cores 21b. This achieves mutual insulation between the positive cores 21a and the negative cores 21b, and prevents problems such as a short circuit and an electric leakage inside the battery cell 20 caused by electrical connection between the positive cores 21a and the negative cores 21b. In this way, safe use of the battery 100 in this application is ensured.

It should be understood that the terms such as "first" and "second" are used for a descriptive purpose only and should not be understood as indicating or implying relative importance or implicitly indicating the quantity of the indicated technical features. Therefore, features defined with "first" and "second" may explicitly or implicitly include one or more of the features. In the descriptions of the implementations of this application, "a plurality of" means two or more, unless otherwise explicitly defined.

In the description of this specification, description of reference terms such as "an implementation", "some implementations", "illustrative implementation", "example", "a specific example", or "some examples" mean that specific features, structures, materials, or characteristics described with reference to the implementations or examples are included in at least one implementation or example of this application. In this specification, illustrative expressions of the foregoing terms do not necessarily refer to a same implementation or example. In addition, specific features, structures, materials, or characteristics described may be combined in an appropriate manner in any one or more implementations or examples.

It should be understood that the application of this application is not limited to the foregoing examples. A person of ordinary skill in the art may make improvements or changes according to the foregoing description, and all the improvements and changes shall fall within the protection scope of the claims appended to this application. A person of ordinary skill in the art may understand that all or some of procedures for implementing the foregoing embodiments and equivalent modifications made according to the claims of this invention shall fall within the scope of this invention.

## Claims

1. A battery (100), comprising:
a housing (10), wherein the housing (10) has an electrically conductive region;
a battery cell (20), accommodated in the housing (10); and
two connecting tabs (30), respectively electrically connected to two electrodes (22) of the battery cell (20), wherein
one of the connecting tabs (30) is electrically connected to the electrically conductive region of the housing (10), and the other connecting tab (30) extends out of the housing (10) and is spaced apart from the electrically conductive region of the housing (10); and the electrically conductive region of the housing (10) and the connecting tab (30) extending out of the housing (10) are respectively configured to be electrically connected to an external circuit.

2. The battery (100) according to claim 1, wherein the housing (10) comprises two detachable parts, and the electrically conductive region of the housing (10) is disposed on one of the parts of the housing (10).

3. The battery (100) according to claim 2, wherein at least one of the two parts of the housing (10) comprises a bottom plate (10a) and a side plate (10b), and the electrically conductive region of the housing (10) is disposed on at least the side plate (10b) and is electrically connected to one of the connecting tabs (30).

4. The battery (100) according to claim 2, wherein the connecting tab (30) extending out of the housing (10) passes through a gap (13) between the two parts of the housing (10).

5. The battery (100) according to claim 4, further comprising an insulating member (40), wherein the insulating member (40) is at least partially located at the gap (13) and is located in a space formed by the connecting tab (30) extending out of the housing (10) and the gap (13).

6. The battery (100) according to claim 5, wherein the insulating member (40) fills the space formed by the connecting tab (30) and the gap (13), and the insulating member (40) is further configured to seal the gap (13).

7. The battery (100) according to any one of claims 1 to 6, further comprising a sealing member (50), wherein one end of the sealing member (50) surrounds and is fastened to an end portion of the connecting tab (30) extending out of the housing (10), and the other end extends toward the housing (10) and abuts against an outer surface of the housing (10).

8. The battery (100) according to any one of claims 1 to 6, wherein the two electrodes (22) of the battery cell (20) are disposed at an interval on a same side of the battery cell (20).

9. The battery (100) according to any one of claims 1 to 7, further comprising a positioning plate (60), wherein the positioning plate (60) is accommodated in the housing (10), the positioning plate (60) is provided with two through holes (61) spaced apart from each other, and each of the two connecting tabs (30) passes through one of the through holes (61) and is electrically connected to one of the electrodes (22).

10. The battery (100) according to any one of claims 5 to 9, wherein two opposite ends of the insulating member (40) respectively extend into the housing (10) and extend out of the housing (10).

11. The battery (100) according to any one of claims 4 to 10, wherein the housing (10) is provided with a first protrusion (141) and a second protrusion (142), and the gap (13) is disposed in the first protrusion (141).

12. The battery (100) according to claim 11, wherein the housing (10) is provided with a recessed portion (15), and both the first protrusion (141) and the second protrusion (142) are disposed in the recessed portion (15).

13. The battery (100) according to any one of claims 1 to 12, wherein the battery cell (20) comprises a plurality of cores (21) each provided with a tab (211), and the plurality of cores (21) comprise a plurality of positive cores (21a) and a plurality of negative cores (21b).

14. The battery (100) according to any one of claims 1 to 13, further comprising a plurality of fasteners (90), wherein the fasteners (90) are disposed on an outer periphery of the housing (10) to fasten the battery (100).

15. A battery module (1000), comprising a battery tray (200) and the battery (100) according to any one of claims 1 to 14, wherein the battery (100) is accommodated in the battery tray.

16. A vehicle, comprising the battery module according to claim 15.
